# EUROPÄISCHE PATENTSCHRIFT

(11) **EP 2 090 809 B1**
(45) Veröffentlichungstag und Bekanntmachung des Hinweises auf die Patenterteilung: **12.01.2011**
(21) Anmeldenummer: 09151292.1
(22) Anmeldetag: 26.01.2009
(51) Int. Cl.: F16H 61/30, F16H 61/28

(54) **Steuerungsverfahren und Steuerungsvorrichtung eines Wendegetriebes**
Control method and device of a reverse gear unit
Procédé de commande et dispositif de commande d'un mécanisme d'inversion

(30) Priorität: 13.02.2008 DE 102008000289
(43) Veröffentlichungstag der Anmeldung: 19.08.2009
(73) Patentinhaber: ZF Friedrichshafen AG, 88038 Friedrichshafen (DE)
(72) Erfinder: Januschevski, Robert, 88069, Tettnang (DE)

(56) Entgegenhaltungen:
- EP-A- 1 411 275
- DE-A1- 19 612 863
- GB-A- 852 629

## Beschreibung

Die vorliegende Erfindung betrifft ein Steuerungsverfahren eines schaltbaren Wendegetriebes eines Fahrzeugs, wobei das Wendegetriebe mittels eines Schaltzylinders in die drei Schaltpositionen Vorwärts, Neutral und Rückwärts geschaltet wird und der Schaltzylinder zu einer elektropneumatischen und elektromagnetischen Steuervorrichtung gehört, welche zusätzlich zumindest zwei Magnetventile in einen Magnetventilblock umfasst, nach dem Oberbegriff des Anspruchs 1. Des Weiteren betrifft die vorliegende Erfindung eine Steuerungsvorrichtung eines schaltbares Wendegetriebes eines Fahrzeugs, wobei das Wendegetriebe mittels eines Schaltzylinders in die drei Schaltpositionen Vorwärts, Neutral und Rückwärts schaltbar ist und der Schaltzylinder zu einer elektropneumatischen und elektromagnetischen Steuervorrichtung gehört, welche zusätzlich zumindest zwei Magnetventile in einen Magnetventilblock umfasst, nach Oberbegriff des Anspruchs 4.

Die steuerung eines Wendegetriebes wird z.B. in der GB 852 629 offenbart.

In Bereich der Schienenfahrzeuge werden modulare Getriebesysteme eingesetzt. Die Systeme bestehen zumindest aus einem Hauptgetriebe, zum Beispiel einem Lastschaltgetriebe oder einem automatisierten Schaltgetriebe und einem Wendegetriebe. Das Wendegetriebe gewährleistet die Momentenübertragung auf die Triebachse der Radsätze und ist somit nach dem Hauptgetriebe in der Kraftflussrichtung angeordnet. Weiter ist das Wendegetriebe in die drei Schaltpositionen Vorwärts, Neutral und Rückwärts schaltbar. Die Schaltung wird pneumatisch mit einem Schaltzylinder mit drei Positionen betätigt. Da nicht immer sichergestellt werden kann, dass der Schaltdruck permanent vorhanden ist, wird jede Schaltposition mechanisch verriegelt. Für jede Schaltstellung und für jede mechanische Verriegelung ist jeweils ein elektrisches Positionssignal vorhanden.

In der normalen Anwendung wird direkt von der Schaltposition Vorwärts über Neutral nach Rückwärts, bzw. von Rückwärts über Neutral nach Vorwärts geschaltet. Bei Ausfall der Steuerung oder der Druckluft kann die Schaltung des Wendegetriebes von Hand durch Entriegeln in die Neutralposition gebracht werden. Der Federdruck einer Mittelstellungsfeder bringt dabei den Schaltzylinder in die Neutralposition.

An Getriebeabtrieb eines Lastschaltgetriebes ist eine Sekundärpumpe eingebaut, welche bei rollendem Fahrzeug und stehendem Motor das Lastschaltgetriebe mit Schmierung versorgt und dabei übernimmt die Funktion der Primärpumpe.

In der EP 1 411 275 A1 wird eine hydraulische Schaltanordnung vorgestellt, welche eine Primärpumpe und eine Sekundärpumpe aufweist.

Lastschaltgetriebe für Kraftfahrzeuge weisen eine vom Motor des Kraftfahrzeuges angetriebene Primärpumpe auf, welche Hydrauliköl in einen Primärkreis fordert, in welchem sich auch der hydrodynamische Drehmomentwandler befindet Es ist bekannt, dass die Primärpumpe auf der Antriebsseite des Wandlers angeordnet ist und versorgt diesen mit Hydrauliköl. Weiter ist es bekannt, zusätzlich zur Primärpumpe eine Sekundärpumpe am Getriebeabtrieb im Lastschaltgetriebe vorzusehen. Durch die Anordnung am Getriebeabtrieb arbeitet die Sekundärpumpe unabhängig vom Motor des Kraftfahrzeuges. Eine solche Sekundärpumpe läuft bei Normalbetrieb der Primärpumpe im Standby, d. h sie fördert Öl drucklos in einen Getriebesumpf. Mit einer solchen Sekundärpumpe kann das Fahrzeug abgeschleppt oder in Schubbetrieb gefahren werden ohne das Getriebe beschädigt wird. Im Falle, dass das Fahrzeug abgeschleppt oder in Schubbetrieb gefahren wird, wird die Sekundärpumpe zugeschaltet bzw. in der Weise angesteuert, dass sie möglichst schnell und effektiv die Funktionen der Primärpumpe übernehmen kann.

Beispielsweise ist aus dem EP 1 411 275 A1 eine hydraulische Schaltanordnung mit einer Primär- und einer Sekundärpumpe gezeigt. Die Sekundärpumpe erhöht die Komplexität eines Systems sowohl als auch die Herstellungskosten. Insbesondere wenn eine Sekundärpumpe neu Entwickelt werden muss, um ein befindliches System für eine neue Anwendung zu benutzen. Wünschenswert wäre in so ein Fall ganz auf die Sekundärpumpe zu verzichten zu können.

Es ist daher Aufgabe der Erfindung ein Steuerungsverfahren und eine Steuerungsvorrichtung eines Wendegetriebe der eingangs genannten Art, insbesondere für Schienenfahrzeuge, darzustellen, wobei das Steuerungsverfahren und die Steuerungsvorrichtung einen Verzicht auf eine Sekundärpumpe in einem Getriebesystem erlauben, ohne dass eine Schädigung eines Hauptgetriebes bei Schubbetrieb des Fahrzeugs riskiert wird.

Ausgehend von einem Verfahren und einer Vorrichtung der eingangs näher genannten Art erfolgt die Lösung dieser Aufgabe mit den Merkmalen des Anspruchs 1 und 4; vorteilhafte Ausgestaltungen sind in den Unteransprüchen beschrieben.

Erfindungsgemäß wird das Wendegetriebe in seine Neutralposition von dem Schaltzylinder geschaltet, wenn ein Schubbetrieb des Fahrzeugs vom Steuergerät erkannt wird. Demzufolge wird das Drehmoment, welches über die Räder in den Antriebsstrang übertragen wird, nur bis das Wendegetriebe übertragen und nicht in dem ohne Schmierdruck stehenden Hauptgetriebe. Somit wird eine Schädigung des Hauptgetriebes vermieden auch wenn das Hauptgetriebe keine Sekundärpumpe aufweist.

In eine bevorzugte Variante des erfindungsgemäßen Verfahrens wird bei einem Druckluft- oder einem Spannungsausfall das Wendegetriebe von dem Schaltzylinder zwangsläufig bzw. automatisch in seine Neutralposition geschaltet. Die Magnetventile des Magnetventilblocks haben zwei Positionen, eine erste Position in welche die Magnetventile die Druckluft durchlässt und eine zweite Position in welche die Magnetventile entlüftet sind. Eine Feder ist derart in den Magnetventilen angeordnet, dass die Feder das Magnetventil in die zweite Position bewirkt. Somit sind die Magnetventile bei einem Spannungsausfall offen und bewirken eine Entlüftung.

Zwei Federn bewirkt der Schaltzylinder derart, dass die erste Feder die Schaltzylinder in seiner Neutralposition positioniert und die zweite Feder eine Entriegelung des Schaltzylinders bewirkt. Bei einem von den Magnetventilen gesteuerte Beaufschlagung der Druckluft, wird der Schaltzylinder von seiner Neutralposition zu seiner Rückwärts- bzw. seiner Vorwärtsposition gesteuert sowie der Schaltzylinder in der entsprechenden Position verriegelt. Bei einer Entlüftung der Magnetventile wird der Schaltzylinder von der zweiten Feder entriegelt und dabei von der ersten Feder seine Neutralposition positioniert und dabei wird das Wendegetriebe in seiner Neutralposition geschaltet.

Durch das erfindungsgemäße Verfahren und die erfindungsgemäße Vorrichtung wird die Komplexität des Getriebesystems verringert und eine günstiger Herstellung des Getriebesystem gesichert, da ein Verzicht auf einer Sekundärpumpe gewährleistet wird.

Weitere Varianten und vorteilhafte Weiterbildungen der Erfindung werden anhand der Zeichnung und der Ausführungsbeispiele beschrieben. Es zeigen:
Fig. 1 Ein Antriebsstrang mit einem Wendegetriebe und
Fig. 2 Eine erfindungsgemäße Steuerungsvorrichtung.

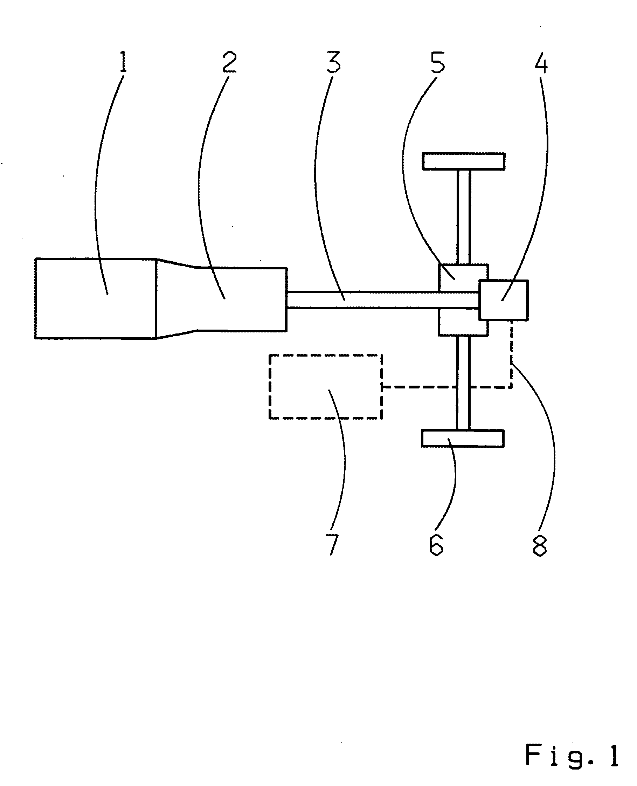

Fig. 1 zeigt eine schematische Darstellung eines Antriebsstrangs mit einem Antriebesmotor 1, welcher mit einem automatisierten oder automatischen Hauptgetriebe 2 verbunden ist. Das Hauptgetriebe 2 treibt über eine Welle 3, ein Wendegetriebe 4 und ein Achsgetriebe 5 die Antriebsräder 6 an. Eine Steuerungsvorrichtung 7 überwacht und steuert das Wendegetriebe 4, so dass es die aktuelle Fahrsituation angepasst ist.

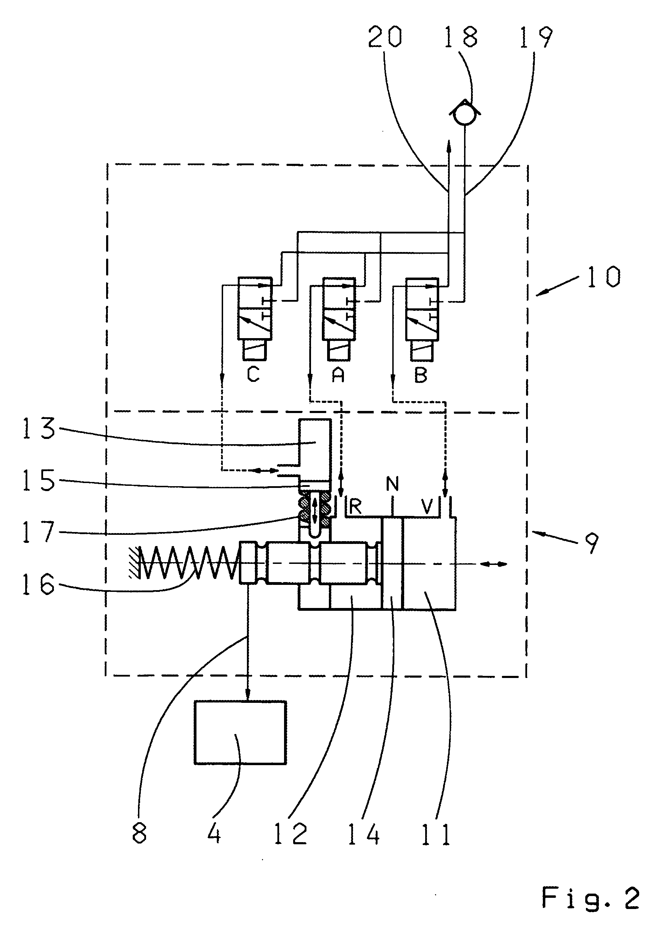

Fig. 2 zeigt eine schematische Darstellung der erfindungsgemäßen Steuerungsvorrichtung 7, mit dem Schaltzylinder 9 und dem Magnetventilblock 10. Der Schaltzylinder 9 hat eine erste und eine zweite Druckkammer 11, 12 auf jeweilige Seite der Kolben 14. Eine erste Feder 16 ist derart mit dem Kolben 14 verbunden, dass die erste Feder 16 in einer Ruhelage ist, wenn der Kolben 14 in seiner Neutralposition N steht, durch Druckluftbeaufschlagung kann der Kolben 14 in zwei zusätzliche Positionen R, V positioniert werden. Der Kolben 14 schaltet das Wendegetriebe 4 über die Verbindung 8. Bei einer Positionierung der Kolben 14 in einer seiner drei Schaltpositionen Rückwärts R, Neutral N und Vorwärts V wird das Wendegetriebe in entsprechende Position über die Verbindung 8 geschaltet. Eine zweite Feder 17 beansprucht eine als Kolben ausgebildete Verriegelung 15 des ersten Kolbens 14.

Der Schaltzylinder 9 wird über den Magnetventilblock 10 mittels Druckluft von der Druckluftquelle 18 gesteuert. Eine erste Leitung 19 verbindet die Druckluftquelle 18 mit den Magnetventilen A, B, C und eine zweite Leitung 20 verbindet die Magnetventilen A, B, C mit einer Entlüftung. Die Magnetventile A, B, C können in einer ersten Position, bei welcher die Druckluftquelle 18 zugeschaltet wird und in einer zweiten Position, in welcher die Entlüftung zugeschaltet wird gesteuert werden. Die Magnetventile A, B, C sind derart ausgebildet, dass in einen unbeaufschlagten Zustand eine Entlüftung die Druckkammern 11, 12, 13 zugelassen wird. Daher, werden die Magnetventile A, B, C bei einem Stromausfall ihre zweite Position, welche der Entlüftung entspricht, einnehmen.

Die Ausgangslage die Magnetventile A, B, C ist in einem unbeaufschlagten Zustand, in welcher der Kolben 14 und die Verriegelung 15 in ihren von den Federn 16, 17 bewirkten Positionen befindet. Dass heißt, der erste Kolben 14 befindet sich unverriegelt in seiner Neutralposition N. Durch eine Zuschaltung des Magnetventils B wird den ersten Druckraum 11 mit der Druckquelle 18 verbunden und somit stellt sich der erste Kolben 14 in der Schaltposition R ein. Ein Einstellen der Schaltposition V geschieht durch eine Entlüftung des ersten Druckraums 11 und eine zuschaltung des Magnetventils A, wobei der zweite Druckraum 12 mit der Druckmittelquelle 18 verbunden wird. Die erste Feder 16 bewirkt der erste Kolben 14 in die Neutralposition N bei einer gleichzeitigen Entlüftung des ersten und des zweiten Druckraums 11,12.

Eine Verriegelung des ersten Kolbens 14 in einen seine drei Schaltpositionen R, N, V wird durch eine Zuschaltung des Magnetventils C realisiert, wobei der Druckraum 13 mit der Druckluftquelle 18 verbunden wird. Durch eine Entlüftung des Druckraums 13 bewirkt die zweite Feder 17 der Verriegelung 15 in einer Position, in welcher der Schaltzylinder 9 entriegelt ist.

### Bezugszeichen

- 1: Motor
- 2: Hauptgetriebe
- 3: Antriebswelle
- 4: Wendegetriebe
- 5: Achsgetriebe
- 6: Räder
- 7: Steuervorrichtung
- 8: Verbindung
- 9: Schaltzylinder
- 10: Magnetventilblock
- 11: Druckraum
- 12: Druckraum
- 13: Druckraum
- 14: Kolben
- 15: Verriegelung
- 16: Feder
- 17: Feder
- 18: Druckquelle
- 19: Leitung
- 20: Leitung

- A: Magnetventil
- B: Magnetventil
- C: Magnetventil

- R: Schaltposition - Rückwärts
- N: Schaltposition - Neutral
- V: Schaltposition - Vorwärts

## Patentansprüche

1. Steuerungsverfahren eines schaltbaren Wendegetriebes (4) eines Fahrzeugs, wobei das Wendegetriebe (4) mittels eines Schaltzylinders (9) in die drei Schaltpositionen Vorwärts, Neutral und Rückwärts geschaltet wird und der Schaltzylinder (9) zu einer elektropneumatischen und elektromagnetischen Steuerungsvorrichtung (7) gehört, welche zusätzlich zumindest zwei Magnetventile in einen Magnetventilblock (10) umfasst, **dadurch gekennzeich**n e t , dass ein Schubbetrieb des Fahrzeugs von der Steuerungsvorrichtung (7) erkannt wird und dabei das Wendegetriebe (4) in seine Neutralposition (N) von dem Schaltzylinder (9) geschaltet wird.

2. Steuerungsverfahren nach Anspruch 1, **dadurch gekennzeich**n e t , dass bei einem Druckluft- oder einem Versorgungsspannungsausfall der Steuerungsvorrichtung (7), das Wendegetriebe (4) von dem Schaltzylinder (9) zwangsläufig in die Neutralposition (N) geschaltet wird.

3. Steuerungsverfahren nach einem der Ansprüche 1 oder 2, **dadurch gekennzeichnet, dass** bei einem Druckluft- oder einem Versorgungsspannungsausfall der Steuerungsvorrichtung (7), die Magnetventile der Magnetventilblock (10) entlüftet werden, wobei der Schaltzylinder (9) entriegelt wird und zwangsläufig das Wendegetriebe (4) in die Neutralposition (N) geschaltet wird.

4. Steuerungsvorrichtung (7) eines schaltbaren Wendegetriebes (4) eines Fahrzeugs zur Durchführung des Steuerungsverfahrens nach einem der vorgenannten Ansprüche, wobei das Wendegetriebe (4) mittels eines Schaltzylinders (9) in die drei Schaltpositionen Vorwärts, Neutral und Rückwärts schaltbar ist und der Schaltzylinder (9) zu einer elektropneumatischen und elektromagnetischen Steuerungsvorrichtung (7) gehört, welche zusätzlich zumindest zwei Magnetventile in einen Magnetventilblock (10) umfasst, wobei eine erste Feder (16) derart im Schaltzylinder angeordnet ist, dass die erste Feder (16) auf den Schaltzylinder in Richtung seiner Neutralposition wirkt, **dadurch gekennzeichnet, dass** eine dritte Feder derart in den Magnetventilen angeordnet ist, dass die dritte Feder die Magnetventile zu einer Entlüftung bewirkt, wodurch der Schaltzylinder (9) von einer zweiten Feder (17) entriegelt und von der ersten Feder (16) in seiner Neutralposition positioniert wird und dabei wird das Wendegetriebe (4) in seine Neutralposition bewegt.

5. Steuerungsvorrichtung (7) nach Anspruch 4, **dadurch gekennzeichnet, dass** eine zweite Feder (17) derart im Schaltzylinder (9) angeordnet ist, dass die zweite Feder (17) eine Entriegelung des Schaltzylinders (9) bewirkt.

## Claims

1. Control method for a shiftable reverse gear unit (4) of a vehicle, with the reverse gear unit (4) being shifted by means of a shift cylinder (9) into the three shift positions of forwards, neutral and reverse, and with the shift cylinder (9) belonging to an electropneumatic and electromagnetic control device (7) which additionally comprises at least two solenoid valves in a solenoid valve block (10), **characterized in that** an overrun mode of the vehicle is detected by the control device (7), and here, the reverse gear unit (4) is shifted into its neutral position (N) by the shift cylinder (9).

2. Control method according to Claim 1, **characterized in that**, in the event of a compressed air or supply voltage failure of the control device (7), the reverse gear unit (4) is positively shifted into the neutral position (N) by the shift cylinder (9).

3. Control method according to one of Claims 1 and 2, **characterized in that**, in the event of a compressed air or supply voltage failure of the control device (7), the solenoid valves of the solenoid valve block (10) are ventilated, with the shift cylinder (9) being unlocked and with the reverse gear unit (4) being positively shifted into the neutral position (N).

4. Control device (7) of a shiftable reverse gear unit (4) of a vehicle for carrying out the control method according to one of the preceding claims, with the reverse gear unit (4) being shiftable by means of a shift cylinder (9) into the three shift positions of forwards, neutral and reverse, and with the shift cylinder (9) belonging to an electropneumatic and electromagnetic control device (7) which additionally comprises at least two solenoid valves in a solenoid valve block (10), with a first spring (16) being arranged in the shift cylinder in such a way that the first spring (16) acts on the shift cylinder in the direction of its neutral position, **characterized in that** a third spring is arranged in the solenoid valves in such a way that the third spring effects a ventilation of the solenoid valves, as a result of which the shift cylinder (9) is unlocked by a second spring (17) and is positioned in its neutral position by the first spring (16), and here, the reverse gear unit (4) is moved into its neutral position.

5. Control device (7) according to Claim 4, **characterized in that** a second spring (17) is arranged in the shift cylinder (9) in such a way that the second spring (17) effects an unlocking of the shift cylinder (9).

## Revendications

1. Procédé de commande d'une transmission réversible commutable (4) d'un véhicule, la transmission réversible (4) étant commutée au moyen d'un cylindre de changement de vitesse (9) dans les trois positions de commutation avant, neutre et arrière et le cylindre de commutation (9) appartenant à un dispositif de commande (7) électropneumatique et électromagnétique, qui comprend en outre au moins deux électrovannes dans un bloc d'électrovannes (10), **caractérisé en ce qu'**un régime de frein moteur du véhicule est détecté par le dispositif de commande (7) et dans ce cas la transmission réversible (4) est commutée par le cylindre de commutation (9) dans sa position neutre (N).

2. Procédé de commande selon la revendication 1, **caractérisé en ce que** dans le cas d'une coupure d'air comprimé ou de tension d'alimentation du dispositif de commande (7), la transmission réversible (4) est commutée par le cylindre de commutation (9) de manière forcée dans la position neutre (N).

3. Procédé de commande selon l'une quelconque des revendications 1 ou 2, **caractérisé en ce que** dans le cas d'une coupure d'air comprimé ou de tension d'alimentation du dispositif de commande (7), les électrovannes du bloc d'électrovannes (10) sont ventilées, le cylindre de commutation (9) étant déverrouillé et la transmission réversible (4) étant commutée de manière forcée dans la position neutre (N).

4. Dispositif de commande (7) d'une transmission réversible commutable (4) d'un véhicule, pour mettre en oeuvre le procédé de commande selon l'une quelconque des revendications précédentes, la transmission réversible (4) pouvant être commutée au moyen d'un cylindre de commutation (9) dans les trois positions de commutation avant, neutre et arrière, et le cylindre de commutation (9) appartenant à un dispositif de commande (7) électropneumatique et électromagnétique, qui comprend en outre au moins deux électrovannes dans un bloc d'électrovannes (10), un premier ressort (16) étant disposé dans le cylindre de commutation de telle sorte que le premier ressort (16) agisse sur le cylindre de commutation dans la direction de sa position neutre, **caractérisé en ce qu'**un troisième ressort est disposé dans les électrovannes de telle sorte que le troisième ressort provoque une ventilation des électrovannes, de telle sorte que le cylindre de commutation (9) soit déverrouillé par un deuxième ressort (17) et soit positionné par le premier ressort (16) dans sa position neutre et dans ce cas la transmission réversible (4) est déplacée dans sa position neutre.

5. Dispositif de commande (7) selon la revendication 4, **caractérisé en ce qu'**un deuxième ressort (17) est disposé dans le cylindre de commutation (9) de telle sorte que le deuxième ressort (17) provoque un déverrouillage du cylindre de commutation (9).
